# FASCICULE DE BREVET EUROPEEN

(11) **EP 1 984 260 B1**
(45) Date de publication et mention de la délivrance du brevet: **20.04.2011**
(21) Numéro de dépôt: 07730931.8
(22) Date de dépôt: 06.02.2007
(51) Int. Cl.: B65D 1/02

(54) **FOND DE MOULE POUR MOULE DE FABRICATION DE RECIPIENTS THERMOPLASTIQUES, ET DISPOSITIF DE MOULAGE EQUIPE D'AU MOINS UN MOULE EQUIPE D'UN TEL FOND**
FORMGRUNDPLATTE FÜR FORMEN ZUR HERSTELLUNG THERMOPLASTISCHER BEHÄLTER UND FORMVORRICHTUNG MIT MINDESTENS EINER FORM MIT EINER DERARTIGEN GRUNDPLATTE
MOULD BASE FOR MOULDS THAT ARE USED TO PRODUCE THERMOPLASTIC CONTAINERS AND MOULDING DEVICE INCLUDING AT LEAST ONE MOULD PROVIDED WITH ONE SUCH BASE

(30) Priorité: 16.02.2006 FR 0601382
(43) Date de publication de la demande: 29.10.2008
(73) Titulaire: SIDEL PARTICIPATIONS, 76930 Octeville-sur-Mer (FR)
(72) Inventeur: PENET, Laurent, 76930 Octeville-sur-Mer (FR); MEILLERAIS, Sylvain, 76930 Octeville-sur-Mer (FR)
(74) Mandataire: Cabinet Plasseraud
(86) Numéro de dépôt international: PCT/FR2007/000215
(87) Numéro de publication internationale: WO 2007/093686

(56) Documents cités:
- EP-A- 0 346 858
- EP-A- 0 551 788
- EP-A- 0 574 342
- WO-A-98/28193
- US-A- 5 804 016

## Description

La présente invention concerne, d'une manière générale, le domaine de la fabrication, par soufflage ou étirage-soufflage, de récipients, notamment de bouteilles, en matière thermoplastique telle que du PET.

Plus spécifiquement, l'invention concerne des perfectionnements apportés dans la conception d'un fond de moule pour un moule de fabrication, par soufflage ou étirage-soufflage, de récipients, notamment de bouteilles, en matière thermoplastique telle que du PET, lesdits récipients ayant un corps et ayant un fond du type dit pétaloïde avec plusieurs pieds qui sont distribués angulairement de façon équidistante, qui s'étendent approximativement parallèlement à l'axe du récipient et qui sont séparés les uns des autres par des vallées rayonnantes à fond d'étendue convexe, ledit fond de moule ayant une cavité de moulage comportant, pour le moulage du susdit fond des récipients, plusieurs cavités qui sont distribuées angulairement de façon équidistante, qui s'étendent approximativement parallèlement à l'axe du fond de moule et qui sont séparées les unes des autres par des dorsales rayonnantes à crête d'étendue concave, les fonds desdites cavités étant distribués sur un contour sensiblement circulaire, chaque cavité, considérée radialement de part et d'autre de son point le plus profond, étant définie :
- vers l'extérieur par une portion de surface courbe qui, en coupe radiale, est sensiblement en arc de cercle et
- vers l'intérieur par une portion de surface en plan dans laquelle une portion de plan adjacente à la portion de surface courbe possède une pente comprise entre 12° et 8° par rapport à un plan qui est tangent à ladite portion de surface courbe et est sensiblement perpendiculaire à l'axe de la cavité (C) de moulage.

Par le terme de "dorsale", on entend désigner une partie saillante, allongée sensiblement radialement, du fond de moule qui conduit, dans le fond du récipient moulé, à la formation d'une susdite "vallée".

La partie des récipients qui est mécaniquement la plus délicate est le fond. C'est en effet le fond qui supporte le poids de la colonne de liquide contenu dans le récipient et il peut perdre sa forme (en particulier affaissement de sa partie centrale) en un laps de temps plus ou moins long selon les conditions environnantes (température, humidité, ensoleillement, ...) de stockage des récipients : les récipients ne peuvent alors plus reposer de façon stable sur un support. Un exemple pour un tel récipient est divulgué par WO9828193.

L'affaissement de la partie centrale du fond de récipient modifie la position et/ou l'inclinaison des parois définissant les pieds en direction de l'axe du récipient. Ainsi les pieds perdent leur orientation approximativement parallèle à l'axe du récipient et, du fait que les pieds possèdent en coupe radiale un contour curviligne, leur zone d'appui sur un support évolue sur leur surface. Le récipient ne repose plus de façon stable sur un support plan.

Or, les commerçants distribuant, dans des pays aux conditions climatiques sévères (température élevée, taux d'humidité élevé), des liquides carbonatés conditionnés dans des récipients en matière thermoplastique telle que du PET souhaitent pouvoir stocker les récipients pendant un intervalle de temps suffisamment long sans que les récipients perdent leur stabilité.

En outre, les fabricants de récipients souhaitent être à même de donner satisfaction aux requêtes des commerçants sans qu'il en résulte une réduction de la cadence de fabrication des récipients, voire si possible au contraire avec des cadences de production encore accrues.

L'invention a précisément pour objet de proposer une solution technique perfectionnée qui soit apte à conduire aux objectifs recherchés en terme d'amélioration de la stabilité dans le temps des fonds des récipients conservés, remplis sous pression, en atmosphère chaude et humide, sans affectation de la cadence de production.

A ces fins, l'invention propose, selon un premier de ses aspects, un fond de moule pour un moule de fabrication, par soufflage ou étirage-soufflage, de récipients, notamment de bouteilles, en matière thermoplastique telle que du PET, comme mentionné au préambule, lequel fond de moule se caractérise, étant agencé conformément à l'invention, en ce que la portion de surface est en plan brisé à au moins deux pentes et intersecte ladite portion de surface courbe selon une arête droite d'étendue sensiblement circonférentielle et contenue dans ledit plan.

Grâce à cet agencement, l'arête droite ainsi constituée au fond des cavités conduit à la formation, pour chaque pied du fond de récipient, d'une arête saillante d'appui d'étendue sensiblement circonférentielle. Cette arête demeure le contact d'appui du pied sur un support plan quelle que soit la déformation et/ou l'inclinaison subie par le pied sous l'effet d'un affaissement de la partie centrale du fond de récipient.

La pente de la portion de plan adjacente à la portion de surface courbe doit être choisie avec soin, car, si cette pente est trop forte, le moulage du fond de récipient s'avère difficile, tandis que, si au contraire cette pente est trop faible, le centre du fond de récipient est trop peu surélevé par rapport aux extrémités des pieds de sorte que la stabilité du récipient sera perdue rapidement. Une pente comprise dans la fourchette mentionnée entre environ 12° et 8° semble devoir donner satisfaction d'une façon générale, une solution préférée étant une pente d'environ 10°.

Dans un mode de réalisation préféré car simple à mettre en oeuvre, on prévoit que la portion de surface en plan brisé est à double pente. Avantageusement alors, la pente de la portion de plan située vers l'intérieur du fond de la cavité de moulage est comprise entre environ 17° et 23°, de préférence entre environ 20° et 21°, typiquement d'environ 20,5°.

Selon un second de ses aspects, l'invention propose également un dispositif de moulage pour la fabrication, par soufflage ou, étirage-soufflage, de récipients, notamment de bouteilles, en matière thermoplastique telle que du PET, lesdits récipients ayant un corps et ayant un fond du type dit pétaloïde avec plusieurs pieds qui sont distribués angulairement de façon équidistante, qui s'étendent approximativement parallèlement à l'axe du récipient et qui sont séparés les uns des autres par des vallées rayonnantes à fond convexe, lequel dispositif de moulage comporte au moins un moule constitué en au moins trois parties dont un fond de moule ayant une cavité de moulage comportant, pour le moulage du susdit fond des récipients, plusieurs cavités qui sont distribuées angulairement de façon équidistante, qui s'étendent approximativement parallèlement à l'axe du fond de moule et qui sont séparées les unes des autres par des dorsales rayonnantes à crête concave, les fonds desdites cavités étant distribués sur un contour sensiblement circulaire, lequel dispositif de moulage, étant agencé conformément à l'invention, se caractérise en ce que le fond de moule est agencé selon l'invention comme expliqué ci-dessus. Une application importante des dispositions de l'invention concerne les machines de soufflage ou étirage-soufflage tournantes du type carrousel équipées d'une multiplicité de moules ayant des fonds respectifs agencés selon l'invention.

L'invention sera mieux comprise à la lecture de la description détaillée qui suit de certains de ses modes de réalisation préférés donnés uniquement à titre d'exemples purement illustratifs. Dans cette description, on se réfère au dessin annexé sur lequel :
- la figure 1 est une vue de dessus d'un fond de moule agencé conformément à l'invention ;
- la figure 2 est une vue en coupe diamétrale selon la ligne II-II du fond de moule de la figure 1 ;
- la figure 3 est une vue partielle à échelle agrandie d'une partie du contour de la cavité de moulage du fond de moule de la figure 2 ;
- la figure 4 est une vue en perspective de trois quarts par le dessus du fond de moule de la figure 1 ; et
- la figure 5 est une vue en perspective isométrique de trois quarts par le dessous du fond d'un récipient moulé avec un fond de moule agencé selon les figures 1 à 4.

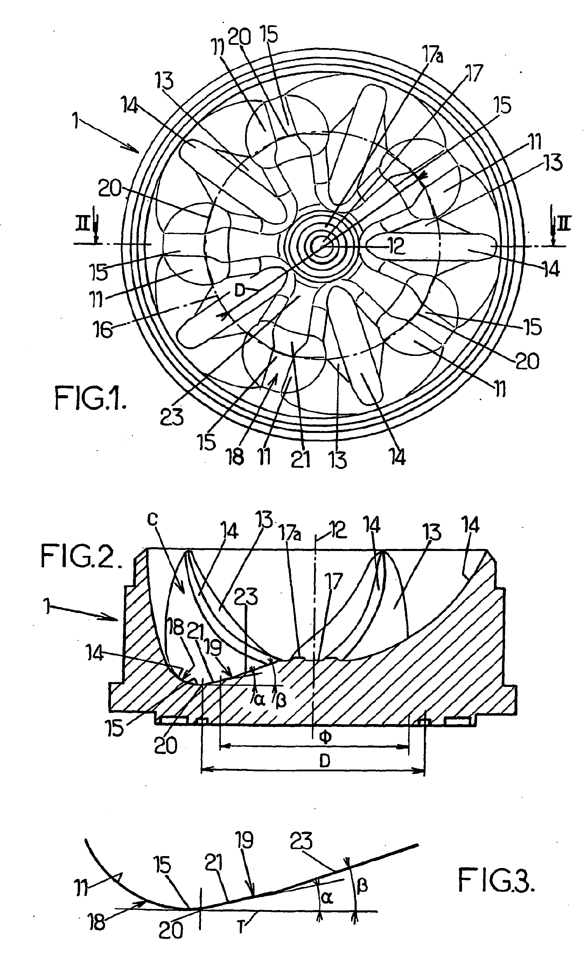

En se reportant maintenant aux figures 1 à 4, il y est représenté un fond 1 de moule destiné à équiper un moule de fabrication, par soufflage ou étirage-soufflage, de récipients, notamment de bouteilles, en matière thermoplastique telle que du PET.

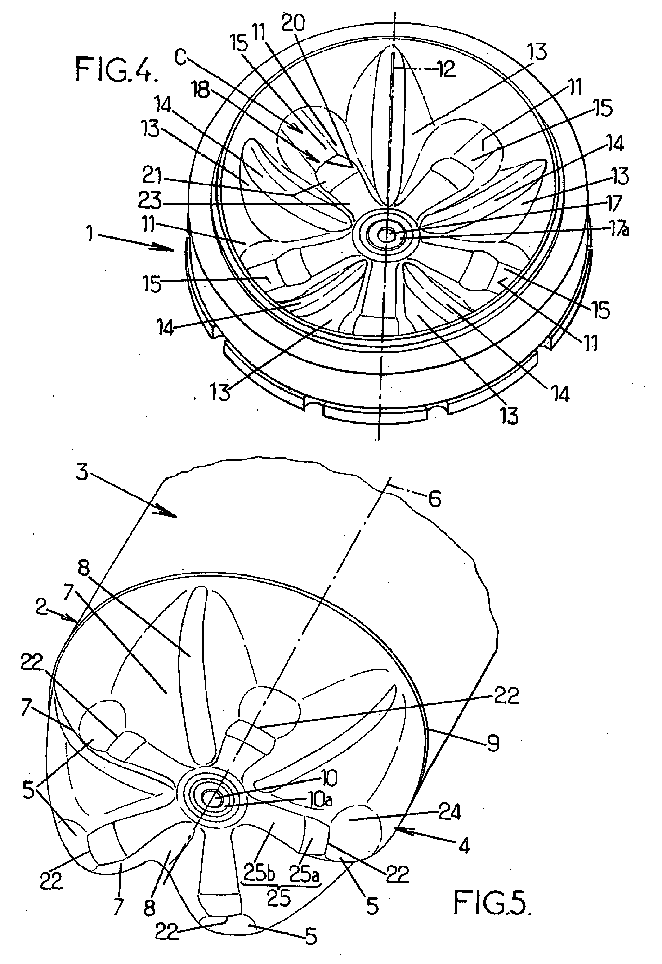

Comme montré à la figure 5, les récipients 2 devant être fabriqués avec ce moule possèdent un corps 3 et possèdent un fond 4 du type dit pétaloïde présentant une pluralité d'excroissances formant pieds 5, généralement en nombre compris entre trois et sept, en pratique entre quatre et six (cinq dans l'exemple illustré), qui sont distribués angulairement de façon équidistante, qui s'étendent approximativement parallèlement à l'axe 6 du récipient et qui sont séparés les uns des autres par des vallées 7 rayonnantes à fond 8 d'étendue curviligne convexe. Toutes les vallées 7 convergent en direction du centre du fond qui .est constitué sous forme d'une empreinte l0a creuse à contour circulaire au centre de laquelle est située une excroissance en forme de plateau 10 circulaire en saillie vers l'extérieur. Le fond 4 du récipient se raccorde au corps 3 du récipient par une zone 9 de raccordement sensiblement cylindrique de révolution.

Le fond 1 de moule est pourvu d'une cavité C de moulage qui comporte, pour le moulage du susdit fond 4 des récipients 2, une pluralité de cavités 11 en nombre égal au nombre des pieds 5 du fond 4 des récipients, en général compris entre trois et sept, en pratique entre quatre et six (cinq dans l'exemple illustré aux figures 1 à 4), qui sont distribuées angulairement de façon équidistante (écartemént angulaire mutuel de 72° dans cet exemple), qui s'étendent approximativement parallèlement à l'axe 12 du fond 1 de moule (qui est aussi l'axe de la cavité C de moulage) et qui sont séparées les unes des autres par des dorsales 13 rayonnantes (c'est-à-dire des parties saillantes, allongées sensiblement radialement, de la cavité C de moulage qui conduisent, dans le fond 4 du récipient moulé, à la formation des susdites vallées 7).

Chaque dorsale 13 possède une crête 14 d'étendue curviligne concave, qui est en forme d'arc de cercle prenant naissance sur le bord de l'empreinte 10a centrale.

Les fonds 15 des cavités 11 sont distribués sur un contour 16 sensiblement circulaire ayant un diamètre de base donné D, ce diamètre correspondant au diamètre de l'assise du fond 4 des récipients (diamètre du contour circulaire sur lequel sont réparties les zones des pieds 5 par lesquelles les récipients reposent sur un support plan) .

Le centre de la cavité C de moulage comporte une table 17a centrale en saillie au centre de laquelle est creusée une dépression 17 circulaire de faible profondeur, pour la formation de l'empreinte 10a et du plateau 10 précités du fond 4 de récipient.

Chaque cavité 11, considérée radialement de part et d'autre de son point le plus profond, est définie, comme on le voit mieux sur la vue en coupe de la figure 2 et encore mieux sur la vue partielle en coupe à échelle agrandie de la figure 3 :
- vers l'extérieur par une portion de surface 18 courbe qui, en coupe radiale, est sensiblement en arc de cercle et
- vers l'intérieur par une portion de surface 19 en plan dans laquelle une portion de plan 21 qui est adjacente à la portion de surface 18 courbe possède une pente a comprise entre 12° et 8°, de préférence d'environ 10°, par rapport audit plan T tangent à ladite portion de surface 18 courbe et est sensiblement perpendiculaire à l'axe 12 de la cavité C de moulage.

Selon l'invention, la portion de surface 19 est en plan brisé à au moins deux pentes et intersecte ladite portion de surface 18 courbe selon une arête 20 droite d'étendue sensiblement circonférentielle et contenue dans le plan T.

Cet agencement du moule conduit à la formation, sur chaque pied 5 du fond 4 de récipient, d'une arête 22 saillante d'appui par laquelle le pied repose sur un support plan. Cet appui, rigidifié par la forme en arête, est procuré quelle que soit la déformation et/ou l'inclinaison du pied sous l'effet d'un affaissement du fond du récipient au cours du temps. Ainsi, en présence d'un affaissement du fond du récipient, le récipient conserve un appui stable sur un support plan.

La pente de la portion de plan 21 qui est adjacente à la portion de surface 18 courbe est, dans la fourchette précitée, suffisante pour que le centre du fond 4 de récipient soit correctement élevé par rapport aux arêtes 22 saillantes d'appui des pieds 5, tout en permettant un moulage facile au cours du processus de soufflage.

Dans le mode de réalisation préféré illustré aux figures annexées, la portion de surface 19 en plan brisé est au moins à double pente ce qui autorise l'obtention du résultat recherché en matière d'amélioration de la stabilité du récipient dans le temps tout en évitant une complexité formelle du fond de récipient préjudiciable à un moulage facile. Dans ces conditions, on prévoit que la pente β de la portion de plan 23 située vers l'intérieur du fond de la cavité C de moulage est comprise entre environ 17° et 23°, de préférence entre environ 20° et 21°, typiquement d'environ 20,5°.

Les arêtes formées par l'intersection des deux portions de plan 21 et 23 sont situées sur un contour circulaire ayant un diamètre Φ d'environ 55 mm dans l'exemple typique où lesdites deux portions de plan ont des pentes respectives d'environ 10° et 20,5°.

Dans ces conditions, comme visible à la figure 5 chaque pied 5 du fond 4 de récipient est défini, de part et d'autre de l'arête 22 saillante d'appui, par une paroi 24 extérieure courbe (moulée au contact de la portion de surface 18 courbe précitée de la cavité C de moulage du fond 1 de moule) et par une paroi 25 intérieure à double pente, respectivement en 25a et 25b (moulée au contact de la portion de surface 19 en plan brisé à double pente précitée de la cavité C de moulage du fond 1 de moule).

Les dispositions conformes à l'invention trouvent une application tout particulièrement préférée dans un dispositif de moulage pour la fabrication, par soufflage ou étirage-soufflage, de récipients 2, notamment de bouteilles, en matière thermoplastique telle que du PET, lesdits récipients 2 ayant un corps 3 et ayant un fond 4 du type dit pétaloïde avec plusieurs pieds 5 qui sont distribués angulairement de façon équidistante, qui s'étendent approximativement parallèlement à l'axe 6 du récipient et qui sont séparés les uns des autres par des vallées 7 rayonnantes à fond 8 convexe, lequel dispositif de moulage comporte au moins un moule constitué en au moins trois parties dont un fond 1 de moule comportant, pour le moulage du susdit fond 4 des récipients, plusieurs cavités 11 qui sont distribuées angulairement de façon équidistante, qui s'étendent approximativement parallèlement à l'axe 12 du fond 1 de moule et qui sont séparées les unes des autres par des dorsales 13 rayonnantes à crête 14 d'étendue concave, les fonds 15 desdites cavités 11 étant distribués sur un contour sensiblement circulaire ayant un diamètre de base donné D, le fond 1 de moule dudit au moins un moule du dispositif de moulage étant alors agencé avec l'une et/ou l'autre des dispositions exposées plus haut. Notamment un tel dispositif de moulage peut être en pratique sous forme d'une machine de soufflage ou étirage-soufflage tournante du type carrousel équipée d'une multiplicité de moules ayant des fonds respectifs agencés selon l'invention.

Grâce aux dispositions particulières proposées par l'invention, il devient possible de fabriquer des récipients, notamment des bouteilles, en matière thermoplastique telle que du PET, qui, en dépit d'un affaissement de leur fond, présentent une stabilité accrue dans le temps, notamment dans une ambiance agressive pour la matière thermoplastique (température élevée, humilité).

## Revendications

1. Fond (1) de moule pour un moule de fabrication, par soufflage ou étirage-soufflage, de récipients (2), notamment de bouteilles, en matière thermoplastique telle que du PET, lesdits récipients (2) ayant un corps (3) et ayant un fond (4) du type dit pétaloïde avec plusieurs pieds (5) qui sont distribués angulairement de façon équidistante, qui s'étendent approximativement parallèlement à l'axe (6) du récipient et qui sont séparés les uns des autres par des vallées (7) rayonnantes à fond (8) d'étendue convexe, ledit fond (1) de moule ayant une cavité (C) de moulage comportant, pour le moulage du susdit fond (4) des récipients (2), plusieurs cavités (11) qui sont distribuées angulairement de façon équidistante, qui s'étendent approximativement parallèlement à l'axe (12) du fond (1) de moule et qui sont séparées les unes des autres par des dorsales (13) rayonnantes à crête (14) d'étendue concave, les fonds (15) desdites cavités (11) étant distribués sur un contour (16) sensiblement circulaire, chaque cavité (11), considérée radialement de part et d'autre de son point le plus profond, étant définie :
- vers l'extérieur par une portion de surface (18) courbe qui, en coupe radiale, est sensiblement en arc de cercle et
- vers l'intérieur par une portion de surface (19) en plan dans laquelle une portion de plan (21) adjacente à la portion de surface (18) courbe possède une pente (α) comprise entre 12° et 8° par rapport à un plan (T) qui est tangent à ladite portion de surface (18) courbe et est sensiblement perpendiculaire à l'axe (12) de la cavité (C) de moulage,
**caractérisé en ce que** la portion de surface (19) est en plan brisé à au moins deux pentes et intersecte ladite portion de surface (18) courbe selon une arête (20) droite d'étendue sensiblement circonférentielle et contenue dans ledit plan (T),
ce grâce à quoi l'arête (20) droite ainsi constituée au fond des cavités (11) conduit à la formation, pour chaque pied (5) du fond (4) de récipient, d'une arête (22) saillante d'appui d'étendue sensiblement circonférentielle.

2. Fond de moule selon la revendication 1, **caractérisé en ce que** la pente (α) de la portion de plan (21) adjacente à la portion de surface (18) courbe est d'environ 10°.

3. Fond de moule selon la revendication 1 ou 2, **caractérisé en ce que** la portion de surface (18) en plan brisé est à double pente.

4. Fond de moule selon la revendication 3, **caractérisé en ce que** la pente (β) de la portion de plan (23) située vers l'intérieur du fond de la cavité (C) de moulage est comprise entre environ 17° et 23°.

5. Fond de moule selon la revendication 4, **caractérisé en ce que** ladite pente (β) est comprise entre environ 20° et 21°.

6. Dispositif de moulage pour la fabrication, par soufflage ou étirage-soufflage, de récipients (2), notamment de bouteilles, en matière thermoplastique telle que du PET, lesdits récipients (2) ayant un corps (3) et ayant un fond (4) du type dit pétaloïde avec plusieurs pieds (5) qui sont distribués angulairement de façon équidistante, qui s'étendent approximativement parallèlement à l'axe (6) du récipient et qui sont séparés les uns des autres par des vallées (7) rayonnantes à fond convexe, lequel dispositif de moulage comporte au moins un moule
constitué en au moins trois parties dont un fond (1) de moule ayant une cavité (C) de moulage comportant, pour le moulage du susdit fond (4) des récipients, plusieurs cavités (11) qui sont distribuées angulairement de façon équidistante, qui s'étendent approximativement parallèlement à l'axe (12) du fond de moule et qui sont séparées les unes des autres par des dorsales (13) rayonnantes à crête (14) d'étendue concave, les fonds (15) desdites cavités (11) étant distribués sur un contour sensiblement circulaire,
**caractérisé en ce que** le fond (1) de moule est agencé selon l'une quelconque des revendications 1 à 5.

## Claims

1. Mould base (1) for a mould for manufacturing, by blow moulding or stretch-blow moulding, containers (2), in particular bottles, made of thermoplastic material such as PET, said containers (2) having a body (3) and having a base (4) of the type known as petaloid with several feet (5) which are equidistantly distributed angularly, which extend approximately parallel to the axis (6) of the container and which are separated from each other by radiating valleys (7) with convex bottoms (8), said mould base (1) having a moulding cavity (C) comprising, for the moulding of said base (4) of the containers (2), several cavities (11) which are equidistantly distributed angularly, which extend approximately parallel to the axis (12) of the mould base (1) and which are separated from each other by radiating ridges (13) with a concave crest (14), the bottoms (15) of said cavities (11) being distributed along a substantially circular contour (16), each cavity (11), seen radially on either side of its deepest point, being defined:
- towards the outside by a curved surface portion (18) which, in radial cross-section, is substantially an arc of a circle and
- towards the inside by a plane surface portion (19) in which a plane portion (21) adjacent to the curved surface portion (18) has a slope (α) between 12° and 8° relative to a plane (T) which is tangent to said curved surface portion (18) and is substantially perpendicular to the axis (12) of the moulding cavity (C),
**characterized in that** the surface portion (19) is a broken-plane surface portion with at least two slopes and intersects said curved surface portion (18) at a straight edge (20) extending substantially circumferentially and contained in said plane (T),
whereby the straight edge (20) thus formed at the bottoms of the cavities (11) leads to the formation, for each foot (5) of the container base (4), of a projecting support ridge (22) extending substantially circumferentially.

2. Mould base according to claim 1, **characterized in that** the slope (α) of the plane portion (21) adjacent to the curved surface portion (18) is approximately 10°.

3. Mould base according to claim 1 or 2, **characterized in that** the broken-plane surface portion (18) has a double slope.

4. Mould base according to claim 3, **characterized in that** the slope (β) of the plane portion (23) situated towards the inside of the base of the moulding cavity (C) is between approximately 17° and 23°.

5. Mould base according to claim 4, **characterized in that** said slope (β) is between approximately 20° and 21° .

6. Moulding device for manufacturing, by blow moulding or stretch-blow moulding, containers (2), in particular bottles, made of thermoplastic material such as PET, said containers (2) having a body (3) and having a base (4) of the type known as petaloid with several feet (5) which are equidistantly distributed angularly, which extend approximately parallel to the axis (6) of the container and which are separated from each other by radiating valleys (7) with convex bottoms, which moulding device comprises at least one mould made up of at least three parts including a mould base (1) having a moulding cavity (C) comprising, for the moulding of said bases (4) of the containers, several cavities (11) which are equidistantly distributed angularly, which extend approximately parallel to the axis (12) of the mould base and which are separated from each other by radiating ridges (13) with concave crests (14), the bottoms (15) of said cavities (11) being distributed along a substantially circular contour,
**characterized in that** the mould base (1) is arranged according to any one of claims 1 to 5.

## Patentansprüche

1. Formboden (1) für eine Herstellungsform, zum Blasformen oder Streck-Blasziehen von Behältern (2), insbesondere von Flaschen aus thermoplastischem Material, wie zum Beispiel PET, die Behälter (2) aufweisend einen Körper (3) und aufweisend einen Boden (4), mit petaloid genannter Ausführungsform, mit einer Vielzahl von Füßen (5), die in äquidistanter Weise winkelförmig verteilt sind, die sich annähernd parallel zur Achse (6) des Behälters erstrecken und die durch strahlenförmige Täler (7) mit Boden (8) konvexer Ausdehnung voneinander getrennt sind, der Formboden (1) aufweisend eine Formgebungsvertiefung (C), umfassend, für die Formgebung des obengenannten Bodens (4) der Behälter (2), eine Vielzahl von Vertiefungen (11), die in äquidistanter Weise winkelförmig verteilt sind, die sich annähernd parallel zur Achse (12) des Formbodens (1) erstrecken und die durch strahlenförmige Rücken (13), mit Scheiteln (14) konkaver Ausdehnung, voneinander getrennt sind, wobei die Böden (15) der Vertiefungen (11) auf einer in etwa kreisförmigen Umrisslinie (16) verteilt sind, jede Vertiefung (11), radial von beiden Seiten ihres tiefsten Punkts betrachtet, definiert:
- nach außen durch einen gekrümmten Oberflächenabschnitt (18), der, radial geschnitten, in etwa kreisbogenförmig ist und
- nach innen durch einen ebenförmigen Oberflächenabschnitt (19) in dem ein ebener an den gekrümmten Oberflächenabschnitt (18) angrenzender ebener Abschnitt (21) eine Neigung (α) zwischen 12° und 8° besitzt, in Bezug auf eine Ebene (T), die tangential zu dem gekrümmten Oberflächenabschnitt (18) ist und in etwa senkrecht zur Achse (12) der Formgebungsvertiefung (C) ist,
**dadurch gekennzeichnet, dass** der Oberflächenabschnitt (19) mit mindestens zwei Neigungen gebrochen ebenförmig ist und den gekrümmten Oberflächenabschnitt (18) schneidet, folgend einer geraden Kante (20) ungefähr umfangsförmiger Ausdehnung und enthalten in der Ebene (T),
wodurch die so am Boden der Vertiefungen (11) gebildete gerade Kante (20) während der Bildung, bei jedem Fuß (5) des Bodens (4) des Behälters, einer hervorstehenden Auflagerungskante (22) ungefähr umfangsförmiger Ausdehnung führt.

2. Formboden gemäß Anspruch 1, **dadurch gekennzeichnet, dass** die Neigung (α) des ebenen Abschnitts (21) angrenzend an den gekrümmten Oberflächenabschnitt (18) ungefähr 10° ist.

3. Formboden gemäß Anspruch 1 oder 2, **dadurch gekennzeichnet, dass** der gebrochen ebenförmige Oberflächenabschnitt (18) eine doppelte Neigung hat.

4. Formboden gemäß Anspruch 3, **dadurch gekennzeichnet, dass** die Neigung (β) des ebenen Abschnitts (23), ins Innere des Bodens der Formgebungsvertiefung gerichtet, zwischen ungefähr 17° und 23° beträgt.

5. Formboden gemäß Anspruch 4, **dadurch gekennzeichnet, dass** die Neigung (β) zwischen ungefähr 20° und 21° beträgt.

6. Formgebungsvorrichtung zur Herstellung von Behältern (2) durch Blasformen oder Streck-Blasziehen, insbesondere von Flaschen aus thermoplastischem Material, wie zum Beispiel PET, die Behälter (2) aufweisend einen Körper (3) und aufweisend einen Boden (4), mit petaloid genannter Ausführungsform, mit einer Vielzahl von Füßen (5), die in äquidistanter Weise winkelförmig verteilt sind, die sich annähernd parallel zur Achse (6) des Behälters erstrecken und die durch strahlenförmige Täler (7) am konvexen Boden voneinander getrennt sind, wobei die Formgebungsvorrichtung mindestens eine Form umfasst, dargestellt durch mindestens drei Abschnitte, darunter ein Formboden (1), aufweisend eine Formgebungsvertiefung (C), umfassend, für die Formgebung des obengenannten Bodens (4) der Behälter, eine Vielzahl von Vertiefungen (11), die in äquidistanter Weise winkelförmig verteilt sind, die sich annähernd parallel zur Achse (12) des Formbodens erstrecken und die durch strahlenförmige Rücken (13), mit Scheiteln (14) konkaver Ausdehnung, voneinander getrennt sind, wobei die Böden (15) der Vertiefungen (11) auf einer in etwa kreisförmigen Umrisslinie (16) verteilt sind,
**dadurch gekennzeichnet, dass** der Formboden (1) gemäß einem der Ansprüche 1 bis 5 gestaltet ist.
